# EUROPEAN PATENT SPECIFICATION

(11) **EP 4 592 052 B1**
(45) Date of publication and mention of the grant of the patent: **29.04.2026**
(21) Application number: 24154108.5
(22) Date of filing: 26.01.2024
(51) Int. Cl.: B29C 48/14, B29C 48/25, B29C 48/285, B29C 31/06, B65G 53/46, B01J 3/02

(54) **PRESSURE LOCK AND EXTRUDING APPARATUS WITH PRESSURE LOCK**
DRUCKSCHLEUSE UND EXTRUSIONSVORRICHTUNG MIT DRUCKSCHLEUSE
DISPOSITIF DE VERROUILLAGE PAR PRESSION ET D'EXTRUSION AVEC VERROUILLAGE PAR PRESSION

(43) Date of publication of application: 30.07.2025
(73) Proprietor: Technische Hochschule Rosenheim, in Vertretung des Freistaates Bayern, 83024 Rosenheim (DE)
(72) Inventor: ZENZ, Vitus, 83024 Rosenheim (DE); MUSCAT, Dirk, 83024 Rosenheim (DE); STRÜBBE, Nicole, 83024 Rosenheim (DE)
(74) Representative: Maiwald GmbH

(56) References cited:
- EP-A1- 0 222 936
- EP-A1- 4 130 532
- WO-A1-92/06030
- CN-A- 111 606 053
- DE-A1- 102013 008 520
- FR-A1- 2 272 728

## Description

### Technical field

The present invention relates to an extruding apparatus for high-pressure extruding processing, and to a pressure lock to be used with the extruding apparatus.

### Technical Background

For processes taking place under high-pressure conditions, devices for introducing material into pressure processes are known, for example in pressure chambers of plants for gasification of biomass and the like. Such devices are used whenever material is to be brought from an area with a lower pressure level into a closed area with a higher pressure level. The challenge is carrying out introducing material without significantly affecting the high-pressure level and without causing a backflow of gases.

Solids and bulk material have mainly been fed into pressure processes in suspensions. High-pressure pumps are primarily used, which can feed small quantities of solids/bulk material into the process. However, the size and quantity of the solids/bulk material as well as the maximum possible pressure are limited. To date, rotary valves have mainly been used for the pure introduction of solids/bulk material into a pressurized atmosphere. These have a very high throughput, but only a maximum process pressure difference of 3 to 4 bar is possible.

Vessel locks may be used to introduce material, in particular solids, from a vessel into pressurized volumes. A vessel lock may be coupled to a vessel that can be filled with material and optionally pressurized. The vessel is filled with the material while the vessel is separated and sealed from the process pressure in the pressurized volume. A container of the vessel lock filled with material from the vessel then is pressurized using a suitable gas, such as nitrogen. When a desired target pressure is reached in the container, the container can be opened towards the pressurized volume.

Apparatuses for high pressure processing and applications are described in:
Aktas, Seda; Gevgilili, Halil; Kucuk, Ilknur; Sunol, Aydin; Kalyon, Dilhan M. (2014): Extrusion of poly(ether imide) foams using pressurized CO 2 : Effects of imposition of supercritical conditions and nanosilica modifiers. In Polym Eng Sci 54 (9), pp. 2064-2074. DOI: 10.1002/pen.23753.

Langlotz, Martin; Düngen, Matthias; Koch, Michael (2019): Single screw extrusion with low pressurized blowing agents. In. PROCEEDINGS OF THE EUROPE/AFRICA CONFERENCE DRESDEN 2017 - POLYMER PROCESSING SOCIETY PPS. Dresden, Germany, 27-29 June 2017: Author(s) (AIP Conference Proceedings), p. 70021.

Verreck, Geert; Decorte, Annelies; Li, Hongbo; Tomasko, David; Arien, Albertina; Peeters, Jef et al. (2006): The effect of pressurized carbon dioxide as a plasticizer and foaming agent on the hot melt extrusion process and extrudate properties of pharmaceutical polymers. In The Journal of Supercritical Fluids 38 (3), pp. 383-391. DOI: 10.1016/j.supflu.2005.11.022.

US 3,495,842 and US 5,738,358 A describe pressurized vessels.

Devices operating as vessel locks are described in:
Stahl, Werner; Stadler, Reinhold (1984): Systeme zum Ein- oder Austrag von Schüttgütern in oder aus Druckräumen. In Chemie Ingenieur Technik 56 (10), pp. 755-768. DOI: 10.1002/cite.330561005.

US 5,997,220 A, US 5, 997,220 A, DE 10 2013 008 520 A1 and DE 10 2014 113 961 A1, DE19 803 688 A1, DE 35 19 651 A1, DE 17 56 691 B, DD 214 828 A1, EP4 130 532 A1 and CN 111606053 describe vessel locks.

There are two fundamental objects with the previous solutions: Due to the condition of using suspensions for conveying, solids/bulk material can be altered, dissolved or even degraded. This applies to non-water-soluble solids/bulk material or materials with a very high/low density, which cannot be transported sufficiently well by the suspension. If pure solids/bulk material has to be conveyed, only differential pressures of 3 to 4 bar can be achieved, as already mentioned above.

### Summary of the invention

The present invention provides a pressure lock and an extruding apparatus for high pressure extrusion according to the independent claims, wherein further embodiments are incorporated in the dependent claims and embodiments described in the following.

According to a first aspect of the present invention, there is provided a pressure lock for material exchange between volumes with a pressure difference, wherein the pressure lock comprises: a housing having a cylindrical inner wall section; a sleeve having a cylindrical inner wall section and a cylindrical outer wall section; and a piston having a first cylindrical outer wall section; wherein the piston has formed therein a material receiving space having a material charging/discharging opening arrangement ending at the first cylindrical outer wall section of the piston; wherein the housing leaves open a material charging area and has a material discharging opening, wherein the material discharge opening is formed through the cylindrical inner wall section of the housing; wherein the cylindrical inner wall section of the housing and the cylindrical outer wall section of the sleeve form a pressured gas tight slide bearing between the material charging area and the material discharging opening allowing an axial movement of the sleeve with respect to the housing; wherein the cylindrical inner wall section of the sleeve and the first cylindrical outer wall section of the piston form a pressured gas tight slide bearing allowing an axial movement of the piston with respect to the sleeve so that the material charging/discharging opening arrangement of the piston is movable from a position where at least one opening portion of the material charging/discharging opening arrangement corresponds to the material charging area to a position where at least one opening portion of the material charging/discharging opening corresponds to the material discharging opening, and vice versa.

Thus, a pressure lock can be provided, which allows a permanent operation by repeated movement of the piston within the housing and alternating connecting the material receiving space with a material charging area and a material discharging opening. The material receiving space with its material charging/discharging arrangement serves for receiving material from a material feeding reservoir and for discharging material to a material discharge volume, e.g., an extruder. As the material feeding reservoir and the material discharge volume may have a significant pressure difference, e.g., the material feeding reservoir may be a low pressurized vessel or atmosphere including material and the material discharge volume may be a high-pressure volume, in particular a high-pressure extruder, alternating connection results in an alternating pressure difference in the material receiving space. A pressure difference occurring upon opening of the material receiving space of the piston which receives or releases material, may result in a clogging of the material or in a turbulent distribution of the material. This may be avoided by providing a sleeve which closes the material receiving space after filling and remains the material receiving space closed upon transit from a low-pressure atmosphere to a high-pressure atmosphere. A pressure equalization may take place upon partially opening the material receiving space, which can be realized by slightly shifting the sleeve, so that a small opening to the material receiving space ventilates the material receiving space without turbulent distribution of the material located inside the material receiving space. The material receiving space is exposed to a slow, i.e., not sudden change of pressure atmosphere reducing a turbulent distribution of the material during discharging material from the material receiving space, as the material receiving space of the piston can be pressure compensated before being opened to the material discharge opening of the housing. After discharging the piston may be moved back to the charging position for a repeated procedure. This allows a continuous operation of, e.g., an extruder under high pressure in the entire extruder where a gas pressure inside an extruder can be maintained without slowing down or stopping the continuous operation of the extruder by discontinuous secondary processes even at large pressure differences. The piston within the housing may operate in an alternating forth and back movement along a longitudinal axis, which may result in an oscillating movement of the piston. The material feeding area and the material discharge opening may be positioned at different longitudinal (axial) positions. The pressure may originate from an external source and may be uniformly distributed throughout the extruder. The pressure may be a gas pressure, which is comparable to the local operating pressure in polymer processing.

The term material charging area may be understood as a space which is left free, i.e., which is not covered by the housing or is outside the housing. A material charging area beside the housing may be useful when operating the charging procedure at environmental atmosphere. In this case the material to be fed may fall by gravity into the material receiving space, when its opening corresponds to the material charging area. Alternatively, the material charging area may be an opening in the housing wall which is open for charging the material receiving space in the piston. The opening in the housing wall may be sealed over the environmental atmosphere and may be operated under positive or negative pressure and/or under artificial atmosphere with an inert gas or the like.

The term "correspond" with respect to an opening portion of the material charging/discharging opening arrangement which corresponds to the material charging area or to a material discharging opening may be understood as an overlap of a material charging/discharging opening arrangement of the material receiving space and an opening of the material charging area or an opening of a material discharging opening. The overlap may be understood as an effective opening allowing a material transit into and out of the material receiving space. The term "correspond" may also comprise an alignment of the respective openings, where the rim of a material charging/discharging opening arrangement of the material receiving space and a rim of an opening of the material charging area or a rim of an opening of a material discharging opening have substantially the same size and match to each other in the respective charging or discharging position. The term "align" may also comprise that the discharge opening of the housing is larger than the discharge opening of the material receiving space but fully covers the discharge opening of the material receiving space upon discharging so as to avoid that material remains in the material receiving space upon discharging. The same applied mutatis mutandis for the charging.

According to an embodiment, the cylindrical inner wall section of the sleeve is a circular cylindrical inner wall section and the piston is a rotatable piston and the first cylindrical outer wall section of the piston is a first circular cylindrical outer wall section; wherein the charging/discharging opening arrangement ends at one radial side of the first circular cylindrical outer wall section of the rotatable piston; wherein the circular cylindrical inner wall section of the sleeve and the first circular cylindrical outer wall section of the rotatable piston form a pressured gas tight slide bearing allowing an axial movement of the rotatable piston with respect to the sleeve and a rotational movement of the rotatable piston with respect to the sleeve so that the material charging/discharging opening arrangement of the rotatable piston is movable from a position where the material charging/discharging opening corresponds to the material charging area to a position where the material charging/discharging opening corresponds to the material discharging opening.

Thus, the piston may operate with a material receiving space in form of a cup (cup-like) within the housing and may operate in an alternating combined rotational and forth and back movement around and along a longitudinal axis, which may result in an oscillating movement of the piston. The cup-like material receiving space may be filled, e.g., under low-pressure atmosphere. After closing the material charging/discharging opening of the cup-like material receiving space, the piston may move across the pressure seal into the high-pressure atmosphere and rotate to be, e.g., upside down for discharge of the material in the cup-like material receiving space into the discharge opening in the housing wall. The opening of the material charging/discharging opening of the cup-like material receiving space, i.e., the removal of the sleeve, may be conducted before rotating the piston or after rotating the piston.

According to an embodiment, the material charging/discharging opening arrangement of the material receiving space has a first opening portion ending at a first radial side of the first circular cylindrical outer wall section of the piston and a second opening portion ending at a second radial side of the first circular cylindrical outer wall section of the piston opposed to the first radial side of the first circular cylindrical outer wall section of the piston.

Thus, the piston may be provided with a material receiving space, which may have two openings at opposing sides. This may avoid the necessity for rotating the piston, as the material may be charged via the first opening into the material receiving space and discharged through the opposing second opening in the material receiving space. The material receiving space and both opposing openings may be manufactured as a traverse through hole in the piston. Before moving the material receiving space from the low-pressure atmosphere to the high-pressure atmosphere, the material receiving space may be closed by the sleeve so as to avoid turbulent material distribution upon pressure compensation. The sleeve may be designed to provide a controlled pressure compensation upon opening.

According to an embodiment, the material charging area and the material discharging opening with respect to a longitudinal center line of the pressure lock are arranged substantially opposite to each other, in particular opposite to each other by 180°, and offset in axial direction.

Thus, a gravity driven charging and discharging may be caried out without significant adhesions of material to inner walls of the material receiving space.

According to an embodiment, the housing, the sleeve and the piston are configured to have subsequently the following positions with respect to each other: a. the material charging/discharging opening arrangement of the piston faces the material charging area of the housing while the sleeve releases the material charging/discharging opening arrangement of the piston; b. the sleeve seals the material charging/discharging opening arrangement of the piston; c. after movement of the piston the material charging/discharging opening arrangement of the piston faces the material discharging opening of the housing while the sleeve seals the material charging/discharging opening arrangement of the piston; d. the sleeve releases the material charging/discharging opening arrangement of the piston while the material charging/discharging opening arrangement of the piston faces the material discharging opening of the housing; e. the sleeve seals the material charging/discharging opening arrangement of the piston; f. after movement of the piston the material charging/discharging opening arrangement of the piston faces the material charging area of the housing while the sleeve releases the material charging/discharging opening arrangement of the piston.

As an alternative to the aforementioned subsequent positions, the steps c. and d. may be modified in that c. after movement of the piston the sleeve releases the material charging/discharging opening arrangement of the piston; and d. the material charging/discharging opening arrangement of the piston faces the material discharging opening of the housing.

Thus, an efficient transport of material within the material receiving space may be carried out from a low-pressure atmosphere to a high-pressure atmosphere. **It** should be noted that the pressure lock described above and hereinafter may also be used for transporting material from a high-pressure atmosphere to a low-pressure atmosphere, i.e., in the other direction.

According to an embodiment, the pressure lock comprises: a sleeve drive for axially moving the sleeve with respect to the housing and the piston; a piston drive for moving the piston with respect to the housing and the sleeve; and a drive control, wherein the drive control is configured to control the sleeve drive and the piston drive to have subsequently the following positions with respect to each other: a. the material charging/discharging opening arrangement of the piston faces the material charging area of the housing while the sleeve releases the material charging/discharging opening arrangement of the piston; b. the sleeve seals the material charging/discharging opening arrangement of the piston; c. after movement of the piston the material charging/discharging opening arrangement of the piston faces the material discharging opening of the housing while the sleeve seals the material charging/discharging opening arrangement of the piston; d. the sleeve releases the material charging/discharging opening arrangement of the piston while the material charging/discharging opening arrangement of the piston faces the material discharging opening of the housing; e. the sleeve seals the material charging/discharging opening arrangement of the piston; f. after movement of the piston the material charging/discharging opening arrangement of the piston faces the material charging area of the housing while the sleeve releases the material charging/discharging opening arrangement of the piston.

As an alternative to the aforementioned subsequent positions, the drive control is configured to control the sleeve drive and the piston drive with respect to steps c. and d. as follows: c. after movement of the piston the sleeve releases the material charging/discharging opening arrangement of the piston; d. the material charging/discharging opening arrangement of the piston faces the material discharging opening of the housing.

Thus, a controllable pressure lock may be provided which establishes a controlled process of charging, closing the material receiving space, transiting the pressure barrier and controlled releasing the sleeve for controlled pressure compensation for avoiding turbulent material distribution before discharging into a high-pressure atmosphere. The controllable drives and the drive control may be adapted with respect to the opening characteristic depending, e.g., on the material, the material condition, grain or powder size (distribution), material adhesion and the like.

According to an embodiment, the piston has a circumferential sleeve abutment being configured upon reception of a corresponding end of the sleeve from a first axial side of the circumferential sleeve abutment to form a dust tight circumferential sealing between the piston and the sleeve.

Thus, the sleeve may form a gas-tight seal between the low-pressure atmosphere and the material receiving space.

According to an embodiment, the circumferential sleeve abutment has a sealing surface being configured upon reception of a corresponding sealing surface of the corresponding end of the sleeve from a first axial side of the circumferential sleeve abutment to form a pressure gas tight circumferential sealing between the piston and the sleeve.

Thus, the sleeve may have an explicit seal surface which may come into a sealed engagement with an explicit seal surface of the circumferential sleeve abutment at the piston to form a gas-tight seal between the low-pressure atmosphere and the material receiving space.

According to an embodiment, the circumferential sleeve abutment and the corresponding end of the sleeve have a peripheral path, so that the sleeve in at least one axial position with respect to the piston covers the second opening portion of the material charging/discharging opening arrangement of the material receiving space and leaves open the first opening portion of the material charging/discharging opening arrangement of the material receiving space.

Thus, the sleeve may be used as selective cover for both openings of the material receiving space, so that one opening can be covered or closed by the sleeve while the other opening is open for charging the material receiving space. The covered or closed opposing opening avoids loss of material charged through the other opening. The peripheral path may be along a slanted plane over the longitudinal axis of the piston. The peripheral path may also be S-curved so as to cover the bottom opening while releasing the opposed top opening of the material receiving space.

According to an embodiment, the piston on a second axial side opposed to the first axial side of the circumferential sleeve abutment has a second cylindrical outer wall section, which has an outer dimension which corresponds to an outer dimension of the cylindrical outer wall section of the sleeve, so that the cylindrical inner wall section of the housing on the one hand and the cylindrical outer wall section of the sleeve and the second cylindrical outer wall section of the piston on the other hand form a pressured gas tight slide bearing allowing an axial movement of the sleeve and the piston with respect to the housing.

Thus, the outer shape of the sleeve and the outer shape of the piston are aligned with each other to form a continuous surface which serves as bearing surface for moving within the inner wall surface of the housing. The aligned surface seals over the housing regardless of whether the housing inner wall seals over the piston or over the sleeve. This maintains the pressure lock sealed independent of the axial position of the piston, as long as the sleeve closes the opening of the material receiving space of the piston.

According to an embodiment, the cylindrical inner wall of the housing has formed therein a first pressured gas tight circumferential sealing pack for sealing against the cylindrical outer wall of the sleeve axially adjacent to one side of the material discharge opening in the cylindrical inner wall of the housing and a second pressured gas tight circumferential sealing pack for sealing against the cylindrical outer wall of the sleeve axially adjacent to the other side of the material discharge opening in the cylindrical inner wall of the housing.

Thus, defined sealing lines can be established sealing the outer wall of the piston and the sleeve over the inner wall of the housing. A sealing pack on each axial side of the discharge opening of the housing establishes a sealing over the environment. A sealing pack may include a single seal or a double seal. The seal may be an O-ring or a shaft seal element or a sealing element with a self-sealing property.

According to an embodiment, the housing comprises around the material discharge opening in the cylindrical inner wall a coupling flange configured for pressured gas tight sealing coupling the housing to a secondary housing, particularly of a pressured atmosphere.

Thus, the discharge opening of the housing can be sealed coupled to a pressured atmosphere. The pressured atmosphere may be an extruding apparatus, which is operated under pressured atmosphere. The inlet of the extruding apparatus may also be provided with a flange so that the pressure lock can be sealed connected to an extruder inlet to maintain the pressured atmosphere within the extruding apparatus.

According to a second aspect of the present invention, there is provided an extruding apparatus for high pressure extrusion processing, wherein the extruding apparatus comprises: at least one extruder screw having a driving rod to be coupled to a drive; a housing having accommodated in a housing interior the at least one extruder screw, the housing having a lead through opening for the driving rod; a material feeding port for feeding material to the housing interior, a material outlet nozzle for letting out extruded material, and a pressure port for pressurizing the housing interior; a high pressure sealing at the lead through opening for the driving rod; a pressure lock as described above at the material feeding port for feeding material to the housing interior of the extruding apparatus, wherein the material discharge opening of the pressure lock is connected gas tight to the material feeding port and which pressure lock is adapted for feeding material into the housing interior of the extruding apparatus, wherein the pressure lock is adapted to separate an atmospheric or lower pressure from a process or higher pressure within the housing interior of the extruding apparatus and maintaining the pressure difference within the housing interior during material feeding.

Thus, it is possible to provide an extruding apparatus which may be continuously operated at higher pressure atmosphere with the option of continuously feeding material from lower pressure atmospheres to the higher pressure atmosphere of the extruding atmosphere. It should be noted that a single screw extruding apparatus may be used, as well as a double screw extruding apparatus.

According to an embodiment, the extruding apparatus further comprises a pressure source being connected to the pressure port, wherein the pressure source is a gas pressure source, in particular a nitrogen gas pressure source, in particular a nitrogen gas pressure source being adapted for applying a pressure of at least 2.5 MPa to the housing interior.

Thus, the pressure atmosphere of the extruding apparatus can be controlled or kept constant. Even pressure variations due to, e.g., continuous material exchange and repeated feeding of residual lower pressure gas volumes in the material receiving space upon each material feeding iteration may be compensated.

According to an embodiment, the extruding apparatus comprises a second pressure lock downstream the material outlet nozzle for letting out material from the housing interior of the extruding apparatus, wherein the second pressure lock is adapted for maintaining the pressure within the housing interior of the extruding apparatus during material outlet. The second pressure lock may be a pressure lock as describe above but operated for material transport form a high-pressure atmosphere to a low-pressure atmosphere.

Thus, also the pressured atmosphere downstream the extruding apparatus may be maintained and exit of extruded material through the second pressure lock may be achieved without losing the pressured atmosphere of the extruding apparatus. In particular a pressure difference between the extruding apparatus input and the extruding apparatus output may be avoided.

It should be understood that the described embodiments can also be combined and that a combination thereof may have a synergetic effect which may extend over the sum of the single effects.

The accompanying drawings are intended for providing a further understanding of embodiments of the present invention. The accompanying drawings illustrate embodiments and, in connection with the description, explain concepts of the present invention.

### Brief description of the figures

The invention will be described in detail referring to the following figures, in which:
- Figure 1A: illustrates a perspective view of a pressure lock in a charging or loading position according to an exemplary embodiment of the invention.
- Figure 1B: illustrates a perspective view of a pressure lock in a discharging or unloading position according to an exemplary embodiment of the invention.
- Figure 2A: illustrates a perspective view of a pressure lock in a charging or loading position according to another exemplary embodiment of the invention.
- Figure 2B: illustrates a perspective view of a pressure lock in a discharging or unloading position according to another exemplary embodiment of the invention.
- Figures 3A-E: illustrate a cross sectional view of position phases of a pressure lock according to an exemplary embodiment of the invention in its different positions.
- Figures 4A-E: illustrate a cross sectional view of position phases of a pressure lock according to another exemplary embodiment of the invention in its different positions.
- Figure 5: illustrates a schematic build-up of an extruding apparatus according to an exemplary embodiment of the invention.

The invention will be described in detail, wherein similar or same components have the same reference numbers. If for a particular figure a component is not described, a description applies which was made with respect to other figures.

### Detailed description of exemplary embodiments

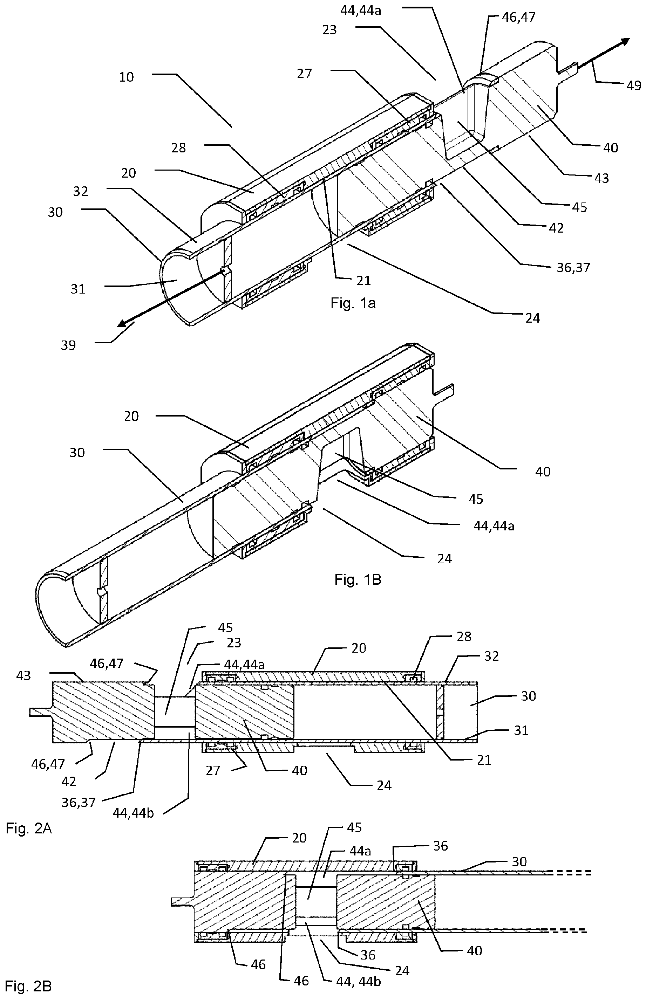

Figure 1A illustrates a perspective view of a pressure lock 10 in a charging or loading position according to an exemplary embodiment of the invention. Figure 1B illustrates a perspective view of a pressure lock 10 in a discharging or unloading position according to an exemplary embodiment of the invention.

A housing 20 surrounds a piston 40 which may be cylinder, in particular a rotary cylinder. The piston 40 rests against a sleeve 30, wherein the outer dimension of the piston 40, in particular the outer diameter of the piston 40 together with the sleeve 30 corresponds to the inner dimension of the housing 20, in particular the inner diameter of the housing 20. The piston 40 and the sleeve 30 may be moved with respect to each other, and both may be moved with respect to the housing 20. The housing 20 has a material charging area 23, where material may be charged into a material receiving space 45 within the interior of the piston 40.

The material receiving space 45 has a material charging/discharging opening arrangement 44. In case the material receiving space 45 is designed as a cup, as illustrated in Figure 1A, the material charging/discharging opening arrangement 44 has a first opening portion 44a. In case the material receiving space is designed as a through hole, as illustrated in Figure 2A, the material charging/discharging opening arrangement 44 has a first opening portion 44a, e.g., for charging material, and a second opening portion 44b, e.g., for discharging material. In case the material charging/discharging opening arrangement 44, in particular the first opening portion 44a corresponds to the material charging area 23, material may be charged to the material receiving space 45. "Corresponding" may be considered as a sufficient overlap of a free space of the material charging area 23, which may also be a lateral opening in a housing wall (not shown in Fig. 1A), with the first opening portion 44a so that material can be charged to the material receiving space 45. The more both openings overlap, the better the charging procedure. After charging the material, the sleeve 30 may be moved along the longitudinal axis and may cover in Figure 1A the first opening portion 44a.

An abutment end 36 of the sleeve 30 may abut against a sleeve abutment 46 of the piston 40 for covering and closing the material receiving space 45. The abutment end 36 of the sleeve 30 may have a sealing surface 37 which may form a gas and pressure tight seal with a corresponding seal surface 47 at the piston 40, in particular with a corresponding seal surface 47 of the sleeve abutment 46 of the piston 40.

The piston 40 with the sleeve 30 covering the material receiving space 45 then moves along the longitudinal axis so that the material receiving space 45 enters a pressured environment when transiting a first pressured gas tight circumferential sealing pack 27 of the housing 20. In the embodiment illustrated in Figures 1A and 1B, the piston 40 with a cup-shaped material receiving space 45 further rotates so that the first opening portion 44a of the material charging/discharging opening arrangement 44 faces a material discharge opening 24 of the housing 20, as illustrated in Figure 1B.

The pressured atmosphere is sealed over the material charging area 23 by the first pressured gas tight circumferential sealing pack 27, whereas the sealing over the other side of the material discharge opening 24 is sealed by a second pressured gas tight circumferential sealing pack 28 of the housing 20.

Then, the sleeve 30 further moves along the longitudinal axis to uncover the material receiving space 45 and to release the material into the pressured atmosphere. It should be understood that the motion of the piston 40 and the motion of the sleeve 30 may be independent motions which may be coordinated via a drive 39 for the sleeve 30 and a drive 49 for the piston 40. Covering of the material receiving space 45 may also take place by moving only the piston 40 until the sleeve 30 remains in place thus covering the material receiving space 45. Likewise, the uncovering may take place until the piston 40 has not rotated and the opening 44a still faces upward, so that uncovering not immediately leads to discharging of the material.

The housing 20 may have a cylindrical inner wall 21 for guiding the outer wall 31 of the sleeve 30 and an outer wall portion of the piston 40, in particular a second cylindrical outer wall section 43 of the rotatable piston 40. It should be noted that the inner wall 21 of the housing may have recessed sections where the inner wall 21 of the housing 20 is not in contact with or distant from the sleeve 30 or the piston 40. These recessed inner wall portions 21 do not have to be mandatorily cylindrical, if they do not serve for guiding the sleeve 30 or the piston 40. The same applies for portions of the outer surface 32 or the cylindrical outer wall section of the sleeve 32 and the outer surface portion 43 or the second cylindrical outer wall section 43 of the piston 40, as long a sealing between the material charging area 23 and the material discharge opening 24 is guaranteed. The same applies mutatis mutandis for the cylindrical inner wall section 31 of the sleeve 30 and the first cylindrical outer wall section 42 of the piston 40. The sleeve 30 with its inner wall section 31 moves along the first cylindrical outer wall section 42 of the piston 40. The first cylindrical outer wall section 42 may have a smaller diameter than the second cylindrical outer wall section 43, so that the cylindrical outer wall section 32 of sleeve 30 has the same diameter as the second cylindrical outer wall section 43. The second cylindrical outer wall section 43 of the piston 40 and the cylindrical outer wall section 32 of the sleeve 30 together form a sliding surface which is pressure tight sealed over the inner wall 21 of the housing 20 at least at the inner wall 21 of the housing 20 at the longitudinal position of the sealing packs 27, 28. These sealing packs 27, 28 may be held in place by mounting outer rings and can be replaced quickly and easily if wear occurs.

The housing 20 of the pressure lock 10 in Figures 1A and 1B is open on both sides. Both openings must be sealed to the outside to prevent pressure loss. These seals may be housed in an interchangeable bushing or sealing pack 27, 28 in order to be able to change the configuration of the seals. In this way, different seal arrangements can be developed and used with the same design. In case the second opening of the housing 20 is totally within the high-pressure atmosphere or is hermetically closed, the second sealing pack 28 can be left out, as no seal is required. However, it should be noted that a mechanical connection for a drive may require a seal over the high-pressure atmosphere. The sleeve 30 can be moved linearly independently of the rotatable piston 40 to uncover the material receiving space 45 in the piston 40. When the sleeve 30 is closed, it abuts with an abutment end 36 against a sleeve abutment 46 which may be screwed onto the piston 40. This sleeve abutment 46 can also be replaced if a different geometry is to be used or if severe wear makes sealing difficult.

In general, although not illustrated here, it is also possible to provide a material charging area 23 on both sides of the housing 20, so that material charging may be carried out on both sides of the housing 20.

The sleeve 30 is an important component of the pressure lock 10. It enables all seals to function correctly as it covers the material receiving space 45. Linear drive units 39 are used to move the sleeve 30 back and forth. Likewise linear drive units 49 are used to move the piston 40 back and forth. In addition, a rotary drive (which may be combined with the linear drive 49) may be provided for rotating the piston 40. The transition between the sleeve 30 and the piston 40 plays a very important role. When the sleeve 40 passes the sealing pack 27, the pressure wants to enter the material receiving space 45. The only way for the pressure to enter the material receiving space 45 is to pass between the sleeve 30 and the piston 40. An adapter ring or sleeve abutment 46 serves as a gate between normal atmosphere and process pressure. The pressure occurs exactly when the sleeve 30 uncovers the material receiving space 45, which may lead to explosive turbulence of the material. However, these turbulences cannot cause the material to leave the material receiving space 45, as the pressure outside the material receiving space 45 would have to be higher and the material would therefore not be able to overcome the air flow generated by the pressure difference.

Figure 2A illustrates a perspective view of a pressure lock 10 in a charging or loading position according to another exemplary embodiment of the invention. Figure 2B illustrates a perspective view of a pressure lock 10 in a discharging or unloading position according to another exemplary embodiment of the invention.

The general operating principle is comparable to that illustrated in Figures 1A and 1B. The piston 40 illustrated in Figures 2A and 2B however has a material receiving space 45 which is designed as a through hole, wherein the material charging/discharging opening arrangement 44 of the material receiving space 45 has a first opening portion 44a and a second opening portion 44b. The first opening portion 44a and the second opening portion 44b are arranged opposite to each other, so that the material can be charged to the material receiving space 45 via the upward facing first opening portion 44a when the first opening portion 44a corresponds to a material charging area 23, and the material can be discharged via the downfacing second opening portion 44b when the second opening portion 44b corresponds to the material discharge opening 24. For this purpose, the sleeve 30 may have a slanted end portion 36, which may cover the second opening portion 44b while releasing the first opening portion 44a when the material receiving space 45 is in a charging position. This position is illustrated in Figure 2A. for covering the first opening portion 44a, the sleeve 30 moves along the longitudinal axis until it abuts with the slanted end portion 36 against the correspondingly slated sleeve abutment 46 of the piston 40. As soon as the material receiving space 45 is covered, the piston 40 and the sleeve 30 may transit through the sealing pack 27 into the high-pressure atmosphere. Upon arrival at the discharge position, the sleeve 30 may move along the longitudinal axis so as to firstly release the first opening portion 44a for ventilation and pressure compensation and then to secondly release the second opening portion 44b for discharging the material through the discharge opening 24 of the housing 20. In this embodiment it is not required to rotate the piston 40 between charging and discharging. Therefore, the piston 40 may have a cylindrical form other than a circular cylindrical form, e.g., an oval cylindrical form. The remaining components are described with respect to Figures 1A and 1B and are not repeated here.

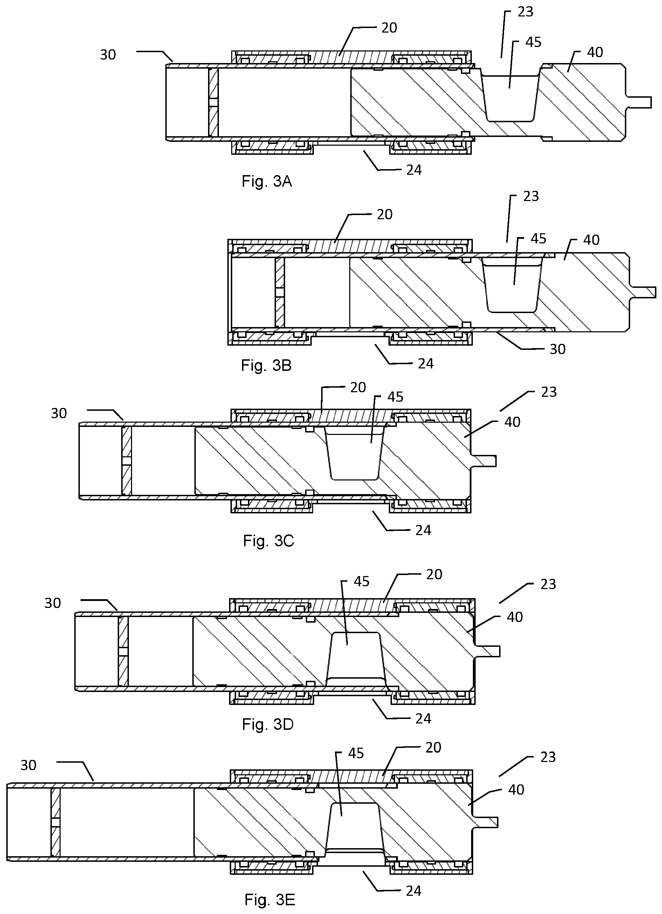

Figures 3A to 3E illustrate a cross sectional view of position phases of a pressure lock 10 according to an exemplary embodiment of the invention in its different positions. The description of the components as described with respect to Figures 1A and 1B applies likewise.

As a first step, material is charged to the material receiving space 45 in the first position as can be seen in Figure 3A.

After this first charging, the sleeve 30 closes the material receiving space 45 in the piston 40 as shown in Figure 3B. As mentioned above, the sleeve 30 with its end portion 36 closes with the sleeve abutment 46 of the piston 40 to achieve a smooth transition between the sleeve 30 and the piston 40 so that the sealing pack 27 functions properly. The sleeve 30 is closed by, e.g., an electromechanical or pneumatic actuator 39, not shown here.

The entire piston 40 together with the sleeve 30 is then moved to the left with the material receiving space 45 closed. The material receiving space 45 passes through, e.g., two high-pressure seals of the sealing pack 27 that seal off the process pressure to the outside. as shown in Figure 3C.

Behind the sealing pack 27, the material receiving space 45 is located directly above the material discharge opening 24 of the housing 20, as shown in Figure 3C. This material discharge opening 24 is directly connected to the pressurized process.

In the next position, the piston 40 is rotated by 180° by, e.g., a geared stepper motor (not shown), as illustrated in Figure 3D, and then the sleeve 30 is opened again and uncovers the material receiving space 45 of the piston 40 as shown in Figure 3E. After uncovering the material receiving space 45, the entire material can fall down into the pressurized process.

As an alternative, after moving the piston 40 to the position illustrated in Figure 3C, the sleeve 30 is opened again and uncovers the material receiving space 45 of the piston 40 and then is rotated by 180° by, e.g., a geared stepper motor (not illustrated). After the rotation, the entire material can fall down into the pressurized process.

Figure 3E shows the emptying of the material schematically. Once the material receiving space 45 has been emptied and all the material is in the process, the piston 40 can be rotated/turned upwards again and the sleeve 30 covers the material receiving space 45 to allow the transition to the outside into the normal atmosphere. In this case, however, the material receiving space 45 is filled with high pressure that wants to escape as soon as the sealing pack 27 is passed and normal atmosphere is reached. The pressure inside is released via a gap between the sleeve 30, in particular the sleeve end portion 36 and the sleeve abutment 46. In the last part of the sequence, the sleeve 30 is opened again and new material can fall into the material receiving space 45 at the material charging area 23. This marks the end of a sequence, and the process may start from the beginning. The sequence of movements defines the operating principle of the pressure lock 10. New material can be charged almost continuously into a pressurized process. The current complete sequence may take around 20 seconds or less and upon optimization may take 5 seconds or less.

It should be noted that the sleeve 30 and the piston 40 may also be moved at the same time and do not have to be moved subsequently. This applies for all embodiments illustrated in Figures 1A to 4E.

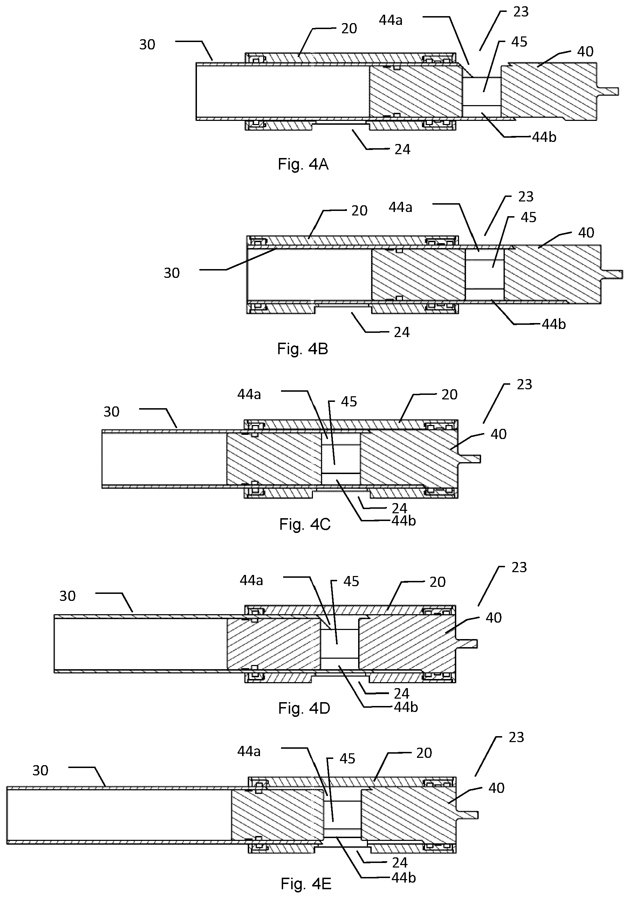

Figures 4A to 4E illustrate a cross sectional view of position phases of a pressure lock according to another exemplary embodiment of the invention in its different positions. The description of the components as described with respect to Figures 1A and 1B applies likewise. The process illustrated in Figures 4A to 4E is similar to that illustrated in Figures 3A to 3E. The main difference is that the material receiving space 45 has two openings which may render a rotation of the piston 40 superfluous.

At first, material is charged to the material receiving space 45 in the first position as can be seen in Figure 4A.

After this charging, the sleeve 30 closes the material receiving space 45 in the piston 40 as shown in Figure 3B. The slanted end portion 36 of sleeve 30 allows covering the bottom second opening 44b while keeping open the upper first opening 44a of the material receiving space 45. As mentioned above, the sleeve 30 with its end portion 36 closes with the sleeve abutment 46 of the piston 40 to achieve a smooth transition between the sleeve 30 and the piston 40 so that the sealing pack 27 functions properly. The sleeve 30 is closed by, e.g., an electromechanical or pneumatic actuator 39, not shown here.

The entire piston 40 together with the sleeve 30 is then moved to the left with the material receiving space 45 closed. The material receiving space 45 passes through, e.g., two high-pressure seals of the sealing pack 27 that seal off the process pressure to the outside, as shown in Figure 4C.

After these two seals of the sealing pack 27, the material receiving space 45 is located directly above the material discharge opening 24 of the housing 20, as shown in Figure 4C and the second opening 44b corresponds to the material discharge opening 24. This material discharge opening 24 is directly connected to the pressurized process. As the material receiving space 45 has two opposing openings 44a and 44b, it is not required to rotate the piston 40 by 180°.

The sleeve 30 then opens again and firstly uncovers the upper first opening 44a of the material receiving space 45 of the piston 40 as shown in Figure 4D for ventilating the material receiving space 45.

After ventilating or pressure compensation in Figure 4D, the sleeve 30 also opens the bottom second opening 44b, as illustrated in Figure 4E. After uncovering the second opening 44b of the material receiving space 45, the entire material can fall down into the pressurized process.

Figure 4E shows the emptying of the material schematically. Once the material receiving space 45 has been emptied and all the material is in the process, the sleeve 30 covers the first and second opening 44a, 44b of the material receiving space 45 to allow the transition to the outside into the normal atmosphere. In this case, however, the material receiving space 45 is filled with high pressure that wants to escape as soon as the sealing pack 27 is passed and normal atmosphere is reached. The pressure inside is released via a gap between the sleeve 30, in particular the sleeve end portion 36 and the sleeve abutment 46. In the last part of the sequence, the sleeve 30 is opened again and new material can fall into the material receiving space 45 at the material charging area 23. This marks the end of a sequence, and the process may start again. The sequence of movements defines the operating principle of the pressure lock 10. New material can be fed almost continuously into a pressurized process.

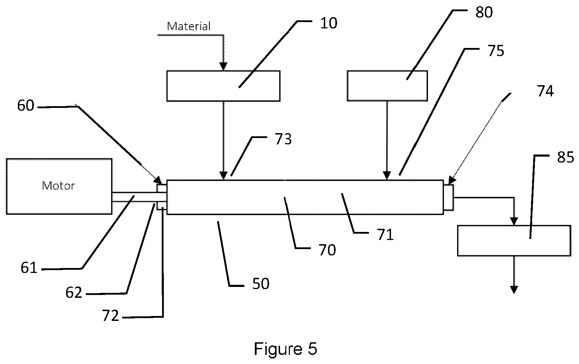

Figure 5 illustrates a schematic build-up of an extruding apparatus 50 according to an exemplary embodiment of the invention. The basic pressurized extrusion process, which can be carried out with an extruding apparatus 50 as illustrated in Figure 5 can be technically described as follows: A drive side of the extruding apparatus 50, i.e. a drive rod 61 of the extruder screw 60 is sealed by a high pressure sealing 62 (not shown) over a lead though opening 72 for the drive rod 61 to the housing interior 71 of the housing 70, which uses special high pressure hydraulic seals. These seals can withstand pressures up to, e.g., 300 bar and are highly wear resistant. Such a seal is provided at the rear end of the extruding apparatus 50. If a twin extruder is used, these high-pressure seals enclose both extruder screws individually and separately. This provides a complete seal of both extruder screws to the drive side. A further sealing concept is required on the feeding side for feeding material to the extruding apparatus 50 through a material feeding port 73. For feeding material continuously, a pressure lock 10 is used, e.g., a pressure lock 10 as described above. In addition, a sealing concept is required for the output side, i.e., toward the material outlet nozzle 74. Depending on the material and the process, a second pressure lock 85 is required to discharge the product from the extruding apparatus 50. If processed material is a polymer or a similar viscous substance, the material can act as a seal even at high pressures. A viscous material even when flowing through the material outlet nozzle 74 may act as a seal, as the flow velocity is low compared to the provided pressure.

Thus, the gas pressure caused by the melted polymer cannot escape through the material outlet nozzle 74. The sealing on the output side by viscous material in the material outlet nozzle 74 is suitable if molten or highly viscous media are to be processed. If a viscosity of a polymer is not capable of ensuring a seal, the nozzle diameter can still be reduced. This increases the flow resistance and provides better seal. If no polymer but solids are being processed, another pressure lock 85 can be placed downstream the material outlet nozzle 74 to provide a second sealing barrier. With these two options, the process is able to process a large number of possible materials by one and the same extruder using a pressurized atmosphere, which is provided by a pressure source 80 through a pressure port 75.

### Reference list

- 10: (first) pressure lock
- 20: housing
- 21: cylindrical inner wall of housing
- 23: charging recess area of housing
- 24: material discharging opening of housing
- 27: first pressured gas tight circumferential sealing pack of housing
- 28: second pressured gas tight circumferential sealing pack of housing
- 30: sleeve
- 31: cylindrical inner wall section of sleeve
- 32: cylindrical outer wall section of sleeve
- 36: abutment end of the sleeve / (slanted) end portion of the sleeve
- 37: sealing surface of abutment end of sleeve
- 39: sleeve drive for driving the sleeve
- 40: piston, rotatable piston
- 42: first cylindrical outer wall section of (rotatable) piston
- 43: second cylindrical outer wall section of (rotatable) piston
- 44: material charging/discharging opening arrangement of (rotatable) piston
- 44a: first opening (portion) of material charging/discharging opening arrangement
- 44b: second opening (portion) of material charging/discharging opening arrangement
- 45: material receiving space of (rotatable) piston
- 46: sleeve abutment of (rotatable) piston
- 47: sealing surface of sleeve abutment of (rotatable) piston
- 49: piston drive for driving the (rotatable) piston
- 50: extruding apparatus
- 60: extruder screw of extruding apparatus
- 61: driving rod of extruder screw
- 62: high pressure sealing
- 70: housing of extruding apparatus
- 71: housing interior of extruding apparatus/extruder housing
- 72: lead through opening of extruder housing for driving rod
- 73: material feeding port
- 74: material outlet nozzle
- 75: pressure port
- 80: pressure source
- 85: pressure reducer/second pressure lock

## Claims

1. A pressure lock (10) for material exchange between volumes with a pressure difference, the pressure lock comprising:
a housing (20) having a cylindrical inner wall section (21);
a sleeve (30) having a cylindrical inner wall section (31) and a cylindrical outer wall section (32); and
a piston (40) having a first cylindrical outer wall section (42);
wherein the piston (40) has formed therein a material receiving space (45) having a material charging/discharging opening arrangement (44) ending at the first cylindrical outer wall section (42);
wherein the housing (20) leaves open a material charging area (23) and has a material discharging opening (24), wherein the material discharge opening (24) is formed through the cylindrical inner wall section (21) of the housing (20);
wherein the cylindrical inner wall section (21) of the housing (20) and the cylindrical outer wall section (32) of the sleeve (30) form a pressured gas tight slide bearing between the material charging area (23) and the material discharging opening (24) allowing an axial movement of the sleeve (30) with respect to the housing (20);
wherein the cylindrical inner wall section (31) of the sleeve (30) and the first cylindrical outer wall section (42) of the piston (40) form a pressured gas tight slide bearing allowing an axial movement of the piston (40) with respect to the sleeve (30) so that the material charging/discharging opening arrangement (44) of the piston (40) is movable from a position where at least one opening portion (44a) of the material charging/discharging opening arrangement (44) corresponds to the material charging area (23) to a position where at least one opening portion (44a, 44b) of the material charging/discharging opening (44) corresponds to the material discharging opening (24), and vice versa.

2. Pressure lock (10) according to claim 1, wherein the cylindrical inner wall section (31) of the sleeve (30) is a circular cylindrical inner wall section (31) and the piston (40) is a rotatable piston (40) and the first cylindrical outer wall section (42) of the piston (40) is a first circular cylindrical outer wall section (42);
wherein the charging/discharging opening arrangement (44) ends at one radial side of the first circular cylindrical outer wall section (42);
wherein the circular cylindrical inner wall section (31) of the sleeve (30) and the first circular cylindrical outer wall section (42) of the rotatable piston (40) form a pressured gas tight slide bearing allowing an axial movement of the rotatable piston (40) with respect to the sleeve (30) and a rotational movement of the rotatable piston (40) with respect to the sleeve (30) so that the material charging/discharging opening arrangement (44) of the rotatable piston (40) is movable from a position where the material charging/discharging opening (44) corresponds to the material charging area (23) to a position where the material charging/discharging opening (44) corresponds to the material discharging opening (24).

3. Pressure lock (10) according to claim 1, wherein the material charging/discharging opening arrangement (44) of the material receiving space (45) has a first opening portion (44a) ending at a first radial side of the first circular cylindrical outer wall section (42) and a second opening portion (44b) ending at a second radial side of the first circular cylindrical outer wall section (42) opposed to the first radial side of the first circular cylindrical outer wall section (42).

4. Pressure lock (10) according to any one of claims 1 to 3, wherein the material charging area (23) and the material discharging opening (24) with respect to a longitudinal center line of the pressure lock (10) are arranged substantially opposite to each other, in particular opposite to each other by 180°, and offset in axial direction.

5. Pressure lock (10) according to any one of claims 1 to 4, wherein the housing (20), the sleeve (30) and the piston (40) are configured to have subsequently the following positions with respect to each other:
(a) the material charging/discharging opening arrangement (44) of the piston (40) faces the material charging area (23) of the housing (20) while the sleeve (30) releases the material charging/discharging opening arrangement (44) of the piston (40);
(b) the sleeve (30) seals the material charging/discharging opening arrangement (44) of the piston (40);
(c) after movement of the piston (40) the material charging/discharging opening arrangement (44) of the piston (40) faces the material discharging opening (24) of the housing (20) while the sleeve (30) seals the material charging/discharging opening arrangement (44) of the piston (40);
(d) the sleeve (30) releases the material charging/discharging opening arrangement (44) of the piston (40) while the material charging/discharging opening arrangement (44) of the piston (40) faces the material discharging opening (24) of the housing (20);
(e) the sleeve (30) seals the material charging/discharging opening arrangement (44) of the piston (40);
(f) after movement of the piston (40) the material charging/discharging opening arrangement (44) of the piston (40) faces the material charging area (23) of the housing (20) while the sleeve (30) releases the material charging/discharging opening arrangement (44) of the piston (40).

6. Pressure lock (10) according to any one of claims 1 to 4, wherein the pressure lock (10) comprises:
a sleeve drive (39) for axially moving of the sleeve (30) with respect to the housing (20) and the piston (40);
a piston drive (49) for moving of the piston (40) with respect to the housing (20) and the sleeve (30); and
a drive control, wherein the drive control is configured to control the sleeve drive (39) and the piston drive (49) to have subsequently the following positions with respect to each other:
(a) the material charging/discharging opening arrangement (44) of the piston (40) faces the material charging area (23) of the housing (20) while the sleeve (30) releases the material charging/discharging opening arrangement (44) of the piston (40);
(b) the sleeve (30) seals the material charging/discharging opening arrangement (44) of the piston (40);
(c) after movement of the piston (40) the material charging/discharging opening arrangement (44) of the piston (40) faces the material discharging opening (24) of the housing (20) while the sleeve (30) seals the material charging/discharging opening arrangement (44) of the piston (40);
(d) the sleeve (30) releases the material charging/discharging opening arrangement (44) of the piston (40) while the material charging/discharging opening arrangement (44) of the piston (40) faces the material discharging opening (24) of the housing (20);
(e) the sleeve (30) seals the material charging/discharging opening arrangement (44) of the piston (40);
(f) after movement of the piston (40) the material charging/discharging opening arrangement (44) of the piston (40) faces the material charging area (23) of the housing (20) while the sleeve (30) releases the material charging/discharging opening arrangement (44) of the piston (40).

7. Pressure lock (10) according to any one of claims 1 to 6, wherein the piston (40) has a circumferential sleeve abutment (46) being configured upon reception of a corresponding end (36) of the sleeve (30) from a first axial side of the circumferential sleeve abutment (46) to form a dust tight circumferential sealing between the piston (40) and the sleeve (30).

8. Pressure lock (10) according to claim 7, wherein the circumferential sleeve abutment (46) has a sealing surface (47) being configured upon reception of a corresponding sealing surface (37) of the corresponding end (36) of the sleeve (30) from a first axial side of the circumferential sleeve abutment (46) to form a pressure gas tight circumferential sealing between the piston (40) and the sleeve (30).

9. Pressure lock (10) according to any one of claims 7 to 8, wherein the circumferential sleeve abutment (46) and the corresponding end (36) of the sleeve (30) have a peripheral path, so that the sleeve (30) in at least one axial position with respect to the piston (40) covers the second opening portion (44b) of the material charging/discharging opening arrangement (44) of the material receiving space (45) and leaves open the first opening portion (44a) of the material charging/discharging opening arrangement (44) of the material receiving space (45).

10. Pressure lock (10) according to any one of claims 7 to 9, wherein the piston (40) on a second axial side opposed to the first axial side of the circumferential sleeve abutment (46) has a second cylindrical outer wall section (43), which has an outer dimension which corresponds to an outer dimension of the cylindrical outer wall section (32) of the sleeve (30), so that the cylindrical inner wall section (21) of the housing (20) on the one hand and the cylindrical outer wall section (32) of the sleeve (30) and the second cylindrical outer wall section (43) of the piston (40) on the other hand form a pressured gas tight slide bearing allowing an axial movement of the sleeve (30) and the piston (40) with respect to the housing (20).

11. Pressure lock (10) according to any one of claims 1 to 10, wherein the cylindrical inner wall (21) of the housing (20) has formed therein a first pressured gas tight circumferential sealing pack (27) for sealing against the cylindrical outer wall (32) of the sleeve (30) axially adjacent on one side of the material discharge opening (24) in the cylindrical inner wall (21) of the housing (20) and a second pressured gas tight circumferential sealing pack (28) for sealing against the cylindrical outer wall (32) of the sleeve (30) axially adjacent on the other side of the material discharge opening (24) in the cylindrical inner wall (21) of the housing (20).

12. Pressure lock (10) according to any one of claims 1 to 11, wherein the housing (20) comprises around the material discharge opening (24) in the cylindrical inner wall (21) a coupling flange configured for pressured gas tight sealing coupling the housing to a secondary housing.

13. An extruding apparatus (50) for high pressure extrusion processing, the extruding apparatus (50) comprising:
at least one extruder screw (60) having a driving rod (61) to be coupled to a drive;
a housing (70) having accommodated in a housing interior (71) the at least one extruder screw (60), the housing having a lead through opening (72) for the driving rod (61), a material feeding port (73) for feeding material to the housing interior (71), a material outlet nozzle (74) for letting out extruded material, and a pressure port (75) for pressurizing the housing interior (71),
a high pressure sealing (62) at the lead through opening (72) for the driving rod (61);
a pressure lock (10) according to any one of claims 1 to 12 at the material feeding port (73) for feeding material to the housing interior (71) of the extruding apparatus (50), wherein the material discharge opening (24) is connected gas tight to the material feeding port (73) and which pressure lock (10) is adapted for feeding material into the housing interior (71) of the extruding apparatus (50), wherein the pressure lock (10) is adapted to separate an atmospheric pressure from a process pressure within the housing interior (71) of the extruding apparatus (50) and maintaining the pressure within the housing interior (71) during material feeding.

14. An extruding apparatus (50) according to claim 13, further comprising a pressure source (80) being connected to the pressure port (75), wherein the pressure source (80) is a gas pressure source, in particular a nitrogen gas pressure source, in particular a nitrogen gas pressure source being adapted for applying a pressure of at least 2.5 MPa to the housing interior (71).

15. An extruding apparatus (50) according to any one of claims 13 and 14, wherein the extruding apparatus (50) comprises a second pressure lock (85) downstream the material outlet nozzle (74) for letting out material from the housing interior (71) of the extruding apparatus (50), wherein the second pressure lock (85) is adapted for maintaining the pressure within the housing interior (71) of the extruding apparatus (50) during material outlet.

## Patentansprüche

1. Eine Druckschleuse (10) zum Materialaustausch zwischen Volumina mit einem Druckunterschied, wobei die Druckschleuse umfasst:
ein Gehäuse (20) mit einem zylindrischen Innenwandabschnitt (21);
eine Hülse (30) mit einem zylindrischen Innenwandabschnitt (31) und einem zylindrischen Außenwandabschnitt (32); und
einen Kolben (40) mit einem ersten zylindrischen Außenwandabschnitt (42); wobei im Kolben (40) ein Materialaufnahmeraum (45) ausgebildet ist, der eine Materialbefüll-/Entladeöffnungsanordnung (44) aufweist, die an dem ersten zylindrischen Außenwandabschnitt (42) endet;
wobei das Gehäuse (20) einen Materialbefüllbereich (23) freilässt und eine Materialentladeöffnung (24) aufweist, wobei die Materialentladeöffnung (24) durch den zylindrischen Innenwandabschnitt (21) des Gehäuses (20) gebildet ist;
wobei der zylindrische Innenwandabschnitt (21) des Gehäuses (20) und der zylindrische Außenwandabschnitt (32) der Hülse (30) ein druckgasdichtes Gleitlager zwischen dem Materialbefüllbereich (23) und der Materialentladeöffnung (24) bilden, das eine axiale Bewegung der Hülse (30) relativ zum Gehäuse (20) ermöglicht;
wobei der zylindrische Innenwandabschnitt (31) der Hülse (30) und der erste zylindrische Außenwandabschnitt (42) des Kolbens (40) ein druckgasdichtes Gleitlager bilden, das eine axiale Bewegung des Kolbens (40) relativ zur Hülse (30) ermöglicht, so dass die Materialbefüllungs-/Entleerungsöffnungs-Anordnung (44) des Kolbens (40) von einer Position, in der mindestens ein Öffnungsabschnitt (44a) der Materialbefüllungs-/Entleerungsöffnungs-Anordnung (44) dem Materialbefüllbereich (23) entspricht, in eine Position bewegbar ist, in der mindestens ein Öffnungsabschnitt (44a, 44b) der Materialbefüllungs-/Entleerungsöffnungs-Anordnung (44) der Materialentladeöffnung (24) entspricht, und umgekehrt.

2. Druckschleuse (10) nach Anspruch 1, wobei der zylindrische Innenwandabschnitt (31) der Hülse (30) ein kreiszylindrischer Innenwandabschnitt (31) ist und der Kolben (40) ein drehbarer Kolben (40) ist und der erste zylindrische Außenwandabschnitt (42) des Kolbens (40) ein erster kreiszylindrischer Außenwandabschnitt (42) ist;
wobei die Materialbefüllungs-/Entleerungsöffnungs-Anordnung (44) an einer radialen Seite des ersten kreiszylindrischen Außenwandabschnitts (42) endet;
wobei der kreiszylindrische Innenwandabschnitt (31) der Hülse (30) und der erste kreiszylindrische Außenwandabschnitt (42) des drehbaren Kolbens (40) ein druckgasdichtes Gleitlager bilden, das eine axiale Bewegung des drehbaren Kolbens (40) relativ zur Hülse (30) und eine Drehbewegung des drehbaren Kolbens (40) relativ zur Hülse (30) ermöglicht, so dass die Materialbefüllungs-/Entleerungsöffnungs-Anordnung (44) des drehbaren Kolbens (40) von einer Position, in der die Materialbefüllungs-/Entleerungsöffnungs-Anordnung (44) dem Materialbefüllbereich (23) entspricht, in eine Position bewegbar ist, in der die Materialbefüllungs-/Entleerungsöffnungs-Anordnung (44) der Materialentladeöffnung (24) entspricht.

3. Druckschleuse (10) nach Anspruch 1, wobei die Materialbefüllungs-/Entleerungsöffnungs-Anordnung (44) des Materialaufnahmeraums (45) einen ersten Öffnungsabschnitt (44a) aufweist, der an einer ersten radialen Seite des ersten kreiszylindrischen Außenwandabschnitts (42) endet, und einen zweiten Öffnungsabschnitt (44b), der an einer zweiten radialen Seite des ersten kreiszylindrischen Außenwandabschnitts (42) endet, die der ersten radialen Seite des ersten kreiszylindrischen Außenwandabschnitts (42) gegenüberliegt.

4. Druckschleuse (10) nach einem der Ansprüche 1 bis 3, wobei der Materialbefüllbereich (23) und die Materialentladeöffnung (24) bezüglich einer Längsmitte der Druckschleuse (10) im Wesentlichen gegenüberliegend angeordnet sind, insbesondere um 180° gegenüberliegend, und in axialer Richtung versetzt sind.

5. Druckschleuse (10) nach einem der Ansprüche 1 bis 4, wobei das Gehäuse (20), die Hülse (30) und der Kolben (40) so ausgestaltet sind, dass sie nacheinander die folgenden Positionen zueinander einnehmen können:
(a) die Materialbefüllungs-/Entleerungsöffnungs-Anordnung (44) des Kolbens (40) ist dem Materialbefüllbereich (23) des Gehäuses (20) zugewandt, während die Hülse (30) die Materialbefüllungs-/Entleerungsöffnungs-Anordnung (44) des Kolbens (40) freigibt;
(b) die Hülse (30) verschließt die Materialbefüllungs-/Entleerungsöffnungs-Anordnung (44) des Kolbens (40);
(c) nach einer Bewegung des Kolbens (40) ist die Materialbefüllungs-/Entleerungsöffnungs-Anordnung (44) des Kolbens (40) der Materialentladeöffnung (24) des Gehäuses (20) zugewandt, während die Hülse (30) die Materialbefüllungs-/Entleerungsöffnungs-Anordnung (44) des Kolbens (40) verschließt;
(d) die Hülse (30) gibt die Materialbefüllungs-/Entleerungsöffnungs-Anordnung (44) des Kolbens (40) frei, während die Materialbefüllungs-/Entleerungsöffnungs-Anordnung (44) des Kolbens (40) der Materialentladeöffnung (24) des Gehäuses (20) zugewandt ist;
(e) die Hülse (30) verschließt die Materialbefüllungs-/Entleerungsöffnungs-Anordnung (44) des Kolbens (40);
(f) nach einer Bewegung des Kolbens (40) ist die Materialbefüllungs-/Entleerungsöffnungs-Anordnung (44) des Kolbens (40) dem Materialbefüllbereich (23) des Gehäuses (20) zugewandt, während die Hülse (30) die Materialbefüllungs-/Entleerungsöffnungs-Anordnung (44) des Kolbens (40) freigibt.

6. Druckschleuse (10) nach einem der Ansprüche 1 bis 4, wobei die Druckschleuse (10) umfasst:
einen Hülsenantrieb (39) zum axialen Bewegen der Hülse (30) relativ zum Gehäuse (20) und zum Kolben (40); einen Kolbenantrieb (49) zum Bewegen des Kolbens (40) relativ zum Gehäuse (20) und zur Hülse (30); und eine Antriebssteuerung, wobei die Antriebssteuerung so eingerichtet ist, dass sie den Hülsenantrieb (39) und den Kolbenantrieb (49) steuert, um nacheinander die folgenden Positionen zueinander einzunehmen:
(a) Die Materialbefüllungs-/Entleerungsöffnungs-Anordnung (44) des Kolbens (40) ist dem Materialbefüllbereich (23) des Gehäuses (20) zugewandt, während die Hülse (30) die Materialbefüllungs-/Entleerungsöffnungs-Anordnung (44) des Kolbens (40) freigibt;
(b) die Hülse (30) verschließt die Materialbefüllungs-/Entleerungsöffnungs-Anordnung (44) des Kolbens (40);
(c) nach einer Bewegung des Kolbens (40) ist die Materialbefüllungs-/Entleerungsöffnungs-Anordnung (44) des Kolbens (40) der Materialentladeöffnung (24) des Gehäuses (20) zugewandt, während die Hülse (30) die Materialbefüllungs-/Entleerungsöffnungs-Anordnung (44) des Kolbens (40) verschließt;
(d) die Hülse (30) gibt die Materialbefüllungs-/Entleerungsöffnungs-Anordnung (44) des Kolbens (40) frei, während die Materialbefüllungs-/Entleerungsöffnungs-Anordnung (44) des Kolbens (40) der Materialentladeöffnung (24) des Gehäuses (20) zugewandt ist;
(e) die Hülse (30) verschließt die Materialbefüllungs-/Entleerungsöffnungs-Anordnung (44) des Kolbens (40);
(f) nach einer Bewegung des Kolbens (40) ist die Materialbefüllungs-/Entleerungsöffnungs-Anordnung (44) des Kolbens (40) dem Materialbefüllbereich (23) des Gehäuses (20) zugewandt, während die Hülse (30) die Materialbefüllungs-/Entleerungsöffnungs-Anordnung (44) des Kolbens (40) freigibt.

7. Druckschleuse (10) nach einem der Ansprüche 1 bis 6, wobei der Kolben (40) einen umlaufenden Hülsenanschlag (46) aufweist, der so ausgestaltet ist, dass beim Aufnehmen eines entsprechenden Endes (36) der Hülse (30) von einer ersten axialen Seite des umlaufenden Hülsenanschlags (46) eine staubdichte umlaufende Abdichtung zwischen dem Kolben (40) und der Hülse (30) gebildet wird.

8. Druckschleuse (10) nach Anspruch 7, wobei der umlaufende Hülsenanschlag (46) eine Dichtfläche (47) aufweist, die so ausgestaltet ist, dass beim Aufnehmen einer entsprechenden Dichtfläche (37) des entsprechenden Endes (36) der Hülse (30) von einer ersten axialen Seite des umlaufenden Hülsenanschlags (46) eine druckgasdichte umlaufende Abdichtung zwischen dem Kolben (40) und der Hülse (30) gebildet wird.

9. Druckschleuse (10) nach einem der Ansprüche 7 bis 8, wobei der umlaufende Hülsenanschlag (46) und das entsprechende Ende (36) der Hülse (30) einen umlaufenden Verlauf aufweisen, so dass die Hülse (30) in mindestens einer axialen Position relativ zum Kolben (40) den zweiten Öffnungsabschnitt (44b) der Materialbefüllungs-/Entleerungsöffnungs-Anordnung (44) des Materialaufnahmeraums (45) abdeckt und den ersten Öffnungsabschnitt (44a) der Materialbefüllungs-/Entleerungsöffnungs-Anordnung (44) des Materialaufnahmeraums (45) freilässt.

10. Druckschleuse (10) nach einem der Ansprüche 7 bis 9, wobei der Kolben (40) an einer zweiten axialen Seite, die der ersten axialen Seite des umlaufenden Hülsenanschlags (46) gegenüberliegt, einen zweiten zylindrischen Außenwandabschnitt (43) aufweist, der eine Außenabmessung besitzt, die einer Außenabmessung des zylindrischen Außenwandabschnitts (32) der Hülse (30) entspricht, so dass der zylindrische Innenwandabschnitt (21) des Gehäuses (20) einerseits und der zylindrische Außenwandabschnitt (32) der Hülse (30) sowie der zweite zylindrische Außenwandabschnitt (43) des Kolbens (40) andererseits ein druckgasdichtes Gleitlager bilden, das eine axiale Bewegung der Hülse (30) und des Kolbens (40) relativ zum Gehäuse (20) ermöglicht.

11. Druckschleuse (10) nach einem der Ansprüche 1 bis 10, wobei die zylindrische Innenwand (21) des Gehäuses (20) darin eine erste druckgasdichte umlaufende Dichtpackung (27) aufweist, die zur Abdichtung gegen die zylindrische Außenwand (32) der Hülse (30) axial angrenzend an einer Seite der Materialentladeöffnung (24) in der zylindrischen Innenwand (21) des Gehäuses (20) angeordnet ist, und eine zweite druckgasdichte umlaufende Dichtpackung (28) zur Abdichtung gegen die zylindrische Außenwand (32) der Hülse (30) axial angrenzend an der anderen Seite der Materialentladeöffnung (24) in der zylindrischen Innenwand (21) des Gehäuses (20) angeordnet ist.

12. Druckschleuse (10) nach einem der Ansprüche 1 bis 11, wobei das Gehäuse (20) um die Materialentladeöffnung (24) in der zylindrischen Innenwand (21) einen Kupplungsflansch aufweist, der für eine druckgasdichte, abdichtende Verbindung des Gehäuses mit einem Sekundärgehäuse ausgelegt ist.

13. Eine Extrusionsvorrichtung (50) für Hochdruck-Extrusionsverfahren, wobei die Extrusionsvorrichtung (50) umfasst:
mindestens eine Extruderschnecke (60) mit einer Antriebsstange (61), die mit einem Antrieb gekoppelt werden kann; ein Gehäuse (70), in dessen Gehäuseinnenraum (71) die mindestens eine Extruderschnecke (60) aufgenommen ist, wobei das Gehäuse eine Durchführungsöffnung (72) für die Antriebsstange (61), eine Materialzufuhröffnung (73) zur Zuführung von Material in den Gehäuseinnenraum (71), eine Materialauslassdüse (74) zum Auslassen des extrudierten Materials und eine Drucköffnung (75) zur Beaufschlagung des Gehäuseinnenraums (71) mit Druck aufweist, eine Hochdruckabdichtung (62) an der Durchführungsöffnung (72) für die Antriebsstange (61); eine Druckschleuse (10) nach einem der Ansprüche 1 bis 12 an der Materialzufuhröffnung (73) zur Zuführung von Material in den Gehäuseinnenraum (71) der Extrusionsvorrichtung (50), wobei die Materialentladeöffnung (24) gasdicht mit der Materialzufuhröffnung (73) verbunden ist und die Druckschleuse (10) zur Zuführung von Material in den Gehäuseinnenraum (71) der Extrusionsvorrichtung (50) ausgelegt ist, wobei die Druckschleuse (10) dazu ausgelegt ist, einen Atmosphärendruck von einem Prozessdruck im Gehäuseinnenraum (71) der Extrusionsvorrichtung (50) zu trennen und den Druck im Gehäuseinnenraum (71) während der Materialzufuhr aufrechtzuerhalten.

14. Extrusionsvorrichtung (50) nach Anspruch 13, ferner umfassend eine Druckquelle (80), die mit der Drucköffnung (75) verbunden ist, wobei die Druckquelle (80) eine Gasdruckquelle ist, insbesondere eine Stickstoff-Gasdruckquelle, insbesondere eine Stickstoff-Gasdruckquelle, die dazu ausgelegt ist, einen Druck von mindestens 2,5 MPa auf den Gehäuseinnenraum (71) auszuüben.

15. Extrusionsvorrichtung (50) nach einem der Ansprüche 13 und 14, wobei die Extrusionsvorrichtung (50) eine zweite Druckschleuse (85) stromabwärts der Materialauslassdüse (74) zum Auslassen von Material aus dem Gehäuseinnenraum (71) der Extrusionsvorrichtung (50) umfasst, wobei die zweite Druckschleuse (85) dazu ausgelegt ist, den Druck im Gehäuseinnenraum (71) der Extrusionsvorrichtung (50) während des Materialaustritts aufrechtzuerhalten.

## Revendications

1. Sas de pression (10) pour l'échange de matière entre des volumes présentant une différence de pression, le sas de pression comprenant :
un boîtier (20) présentant une section de paroi intérieure cylindrique (21) ;
un manchon (30) présentant une section de paroi intérieure cylindrique (31) et une section de paroi extérieure cylindrique (32) ; et
un piston (40) présentant une première section de paroi extérieure cylindrique (42) ;
dans lequel le piston (40) présente à l'intérieur un espace de réception de matière (45) avec un agencement d'ouverture de chargement/déchargement de matière (44) se terminant au niveau de la première section de paroi extérieure cylindrique (42) ;
dans lequel le boîtier (20) laisse ouverte une zone de chargement de matière (23) et présente une ouverture de déchargement de matière (24), dans lequel l'ouverture de déchargement de matière (24) est formée à travers la section de paroi intérieure cylindrique (21) du boîtier (20) ;
dans lequel la section de paroi intérieure cylindrique (21) du boîtier (20) et la section de paroi extérieure cylindrique (32) du manchon (30) forment un palier lisse étanche aux gaz sous pression entre la zone de chargement de matière (23) et l'ouverture de déchargement de matière (24), permettant un mouvement axial du manchon (30) par rapport au boîtier (20) ;
dans lequel la section de paroi intérieure cylindrique (31) du manchon (30) et la première section de paroi extérieure cylindrique (42) du piston (40) forment un palier lisse étanche aux gaz sous pression permettant un mouvement axial du piston (40) par rapport au manchon (30), de sorte que l'agencement d'ouverture de chargement/déchargement de matière (44) du piston (40) est mobile d'une position dans laquelle au moins une partie d'ouverture (44a) de l'agencement d'ouverture de chargement/déchargement de matière (44) correspond à la zone de chargement de matière (23) à une position dans laquelle au moins une partie d'ouverture (44a, 44b) de l'ouverture de chargement/déchargement de matière (44) correspond à l'ouverture de déchargement de matière (24), et vice versa.

2. Sas de pression (10) selon la revendication 1, dans lequel la section de paroi intérieure cylindrique (31) du manchon (30) est une section de paroi intérieure cylindrique circulaire (31) et le piston (40) est un piston rotatif (40), et la première section de paroi extérieure cylindrique (42) du piston (40) est une première section de paroi extérieure cylindrique circulaire (42) ;
dans lequel l'agencement d'ouverture de chargement/déchargement (44) se termine au niveau d'un côté radial de la première section de paroi extérieure cylindrique circulaire (42) ;
dans lequel la section de paroi intérieure cylindrique circulaire (31) du manchon (30) et la première section de paroi extérieure cylindrique circulaire (42) du piston rotatif (40) forment un palier lisse étanche aux gaz sous pression permettant un mouvement axial du piston rotatif (40) par rapport au manchon (30) et un mouvement de rotation du piston rotatif (40) par rapport au manchon (30), de sorte que l'agencement d'ouverture de chargement/déchargement de matière (44) du piston rotatif (40) est mobile d'une position dans laquelle l'ouverture de chargement/déchargement de matière (44) correspond à la zone de chargement de matière (23) à une position dans laquelle l'ouverture de chargement/déchargement de matière (44) correspond à l'ouverture de déchargement de matière (24).

3. Sas de pression (10) selon la revendication 1, dans lequel l'agencement d'ouverture de chargement/déchargement de matière (44) de l'espace de réception de matière (45) présente une première partie d'ouverture (44a) se terminant au niveau d'un premier côté radial de la première section de paroi extérieure cylindrique circulaire (42) et une deuxième partie d'ouverture (44b) se terminant au niveau d'un deuxième côté radial de la première section de paroi extérieure cylindrique circulaire (42) opposé au premier côté radial de la première section de paroi extérieure cylindrique circulaire (42).

4. Sas de pression (10) selon l'une quelconque des revendications 1 à 3, dans lequel la zone de chargement de matière (23) et l'ouverture de déchargement de matière (24) par rapport à une ligne centrale longitudinale du sas de pression (10) sont disposées sensiblement à l'opposé l'une de l'autre, en particulier à 180° l'une de l'autre, et décalées dans la direction axiale.

5. Sas de pression (10) selon l'une quelconque des revendications 1 à 4, dans lequel le boîtier (20), le manchon (30) et le piston (40) sont configurés pour avoir successivement les positions suivantes les uns par rapport aux autres :
(a) l'agencement d'ouverture de chargement/déchargement de matière (44) du piston (40) fait face à la zone de chargement de matière (23) du boîtier (20) tandis que le manchon (30) libère l'agencement d'ouverture de chargement/déchargement de matière (44) du piston (40) ;
(b) le manchon (30) rend étanche l'agencement d'ouverture de chargement/déchargement de matière (44) du piston (40) ;
(c) après le mouvement du piston (40), l'agencement d'ouverture de chargement/déchargement de matière (44) du piston (40) fait face à l'ouverture de déchargement de matière (24) du boîtier (20) tandis que le manchon (30) rend étanche l'agencement d'ouverture de chargement/déchargement de matière (44) du piston (40) ;
(d) le manchon (30) libère l'agencement d'ouverture de chargement/déchargement de matière (44) du piston (40) tandis que l'agencement d'ouverture de chargement/déchargement de matière (44) du piston (40) fait face à l'ouverture de déchargement de matière (24) du boîtier (20) ;
(e) le manchon (30) rend étanche l'agencement d'ouverture de chargement/déchargement de matière (44) du piston (40) ;
(f) après le mouvement du piston (40), l'agencement d'ouverture de chargement/déchargement de matière (44) du piston (40) fait face à la zone de chargement de matière (23) du boîtier (20) tandis que le manchon (30) libère l'agencement d'ouverture de chargement/déchargement de matière (44) du piston (40).

6. Sas de pression (10) selon l'une quelconque des revendications 1 à 4, dans lequel le sas de pression (10) comprend :
un entraînement de manchon (39) pour déplacer axialement le manchon (30) par rapport au boîtier (20) et au piston (40) ;
un entraînement de piston (49) pour déplacer le piston (40) par rapport au boîtier (20) et au manchon (30) ; et
une commande d'entraînement, dans lequel la commande d'entraînement est configurée pour commander l'entraînement de manchon (39) et l'entraînement de piston (49) afin qu'ils aient successivement les positions suivantes l'un par rapport à l'autre :
(a) l'agencement d'ouverture de chargement/déchargement de matière (44) du piston (40) fait face à la zone de chargement de matière (23) du boîtier (20) tandis que le manchon (30) libère l'agencement d'ouverture de chargement/déchargement de matière (44) du piston (40) ;
(b) le manchon (30) rend étanche l'agencement d'ouverture de chargement/déchargement de matière (44) du piston (40) ;
(c) après le mouvement du piston (40), l'agencement d'ouverture de chargement/déchargement de matière (44) du piston (40) fait face à l'ouverture de déchargement de matière (24) du boîtier (20) tandis que le manchon (30) rend étanche l'agencement d'ouverture de chargement/déchargement de matière (44) du piston (40) ;
(d) le manchon (30) libère l'agencement d'ouverture de chargement/déchargement de matière (44) du piston (40) tandis que l'agencement d'ouverture de chargement/déchargement de matière (44) du piston (40) fait face à l'ouverture de déchargement de matière (24) du boîtier (20) ;
(e) le manchon (30) rend étanche l'agencement d'ouverture de chargement/déchargement de matière (44) du piston (40) ;
(f) après le mouvement du piston (40), l'agencement d'ouverture de chargement/déchargement de matière (44) du piston (40) fait face à la zone de chargement de matière (23) du boîtier (20) tandis que le manchon (30) libère l'agencement d'ouverture de chargement/déchargement de matière (44) du piston (40).

7. Sas de pression (10) selon l'une quelconque des revendications 1 à 6, dans lequel le piston (40) présente une butée de manchon circonférentielle (46) configurée, lors de la réception d'une extrémité correspondante (36) du manchon (30) à partir d'un premier côté axial de la butée de manchon circonférentielle (46), pour former un joint circonférentiel étanche à la poussière entre le piston (40) et le manchon (30).

8. Sas de pression (10) selon la revendication 7, dans lequel la butée de manchon circonférentielle (46) présente une surface d'étanchéité (47) configurée, lors de la réception d'une surface d'étanchéité correspondante (37) de l'extrémité correspondante (36) du manchon (30) à partir d'un premier côté axial de la butée de manchon circonférentielle (46), pour former un joint circonférentiel étanche aux gaz sous pression entre le piston (40) et le manchon (30).

9. Sas de pression (10) selon l'une quelconque des revendications 7 à 8, dans lequel la butée de manchon circonférentielle (46) et l'extrémité correspondante (36) du manchon (30) présentent un chemin périphérique, de sorte que le manchon (30), dans au moins une position axiale par rapport au piston (40), recouvre la deuxième partie d'ouverture (44b) de l'agencement d'ouverture de chargement/déchargement de matière (44) de l'espace de réception de matière (45) et laisse ouverte la première partie d'ouverture (44a) de l'agencement d'ouverture de chargement/déchargement de matière (44) de l'espace de réception de matière (45).

10. Sas de pression (10) selon l'une quelconque des revendications 7 à 9, dans lequel le piston (40) présente, sur un deuxième côté axial opposé au premier côté axial de la butée de manchon circonférentielle (46), une deuxième section de paroi extérieure cylindrique (43) dont la dimension extérieure correspond à la dimension extérieure de la section de paroi extérieure cylindrique (32) du manchon (30), de sorte que la section de paroi intérieure cylindrique (21) du boîtier (20) d'une part, et la section de paroi extérieure cylindrique (32) du manchon (30) et la deuxième section de paroi extérieure cylindrique (43) du piston (40) d'autre part forment un palier lisse étanche aux gaz sous pression permettant un mouvement axial du manchon (30) et du piston (40) par rapport au boîtier (20).

11. Sas de pression (10) selon l'une quelconque des revendications 1 à 10, dans lequel la paroi intérieure cylindrique (21) du boîtier (20) présente à l'intérieur un premier ensemble d'étanchéité circonférentiel étanche aux gaz sous pression (27) pour assurer l'étanchéité contre la paroi extérieure cylindrique (32) du manchon (30) axialement adjacent d'un côté de l'ouverture de déchargement de matière (24) dans la paroi intérieure cylindrique (21) du boîtier (20) et un deuxième ensemble d'étanchéité circonférentiel étanche aux gaz sous pression (28) pour assurer l'étanchéité contre la paroi extérieure cylindrique (32) du manchon (30) axialement adjacent de l'autre côté de l'ouverture de déchargement de matière (24) dans la paroi intérieure cylindrique (21) du boîtier (20).

12. Sas de pression (10) selon l'une quelconque des revendications 1 à 11, dans lequel le boîtier (20) comprend, autour de l'ouverture de déchargement de matière (24) dans la paroi intérieure cylindrique (21), une bride d'accouplement configurée pour accoupler de manière étanche aux gaz sous pression le boîtier à un boîtier secondaire.

13. Appareil d'extrusion (50) pour un traitement d'extrusion sous haute pression, l'appareil d'extrusion (50) comprenant :
au moins une vis d'extrusion (60) ayant une tige d'entraînement (61) destinée à être accouplée à un entraînement ;
un boîtier (70) dans lequel est logée, dans un intérieur de boîtier (71), ladite au moins une vis d'extrusion (60), le boîtier présentant une ouverture de passage (72) pour la tige d'entraînement (61), un orifice d'alimentation en matière (73) pour alimenter en matière l'intérieur de boîtier (71), une buse de sortie de matière (74) pour laisser sortir la matière extrudée, et un orifice de pression (75) pour pressuriser l'intérieur de boîtier (71),
un joint haute pression (62) au niveau de l'ouverture de passage (72) pour la tige d'entraînement (61) ;
un sas de pression (10) selon l'une quelconque des revendications 1 à 12 au niveau de l'orifice d'alimentation en matière (73) pour alimenter en matière l'intérieur de boîtier (71) de l'appareil d'extrusion (50), dans lequel l'ouverture de déchargement de matière (24) est reliée de manière étanche aux gaz à l'orifice d'alimentation en matière (73) et lequel sas de pression (10) est adapté à alimenter en matière l'intérieur de boîtier (71) de l'appareil d'extrusion (50), dans lequel le sas de pression (10) est adapté à séparer la pression atmosphérique de la pression de traitement dans l'intérieur de boîtier (71) de l'appareil d'extrusion (50) et à maintenir la pression dans l'intérieur de boîtier (71) pendant l'alimentation en matière.

14. Appareil d'extrusion (50) selon la revendication 13, comprenant en outre une source de pression (80) reliée à l'orifice de pression (75), dans lequel la source de pression (80) est une source de pression de gaz, en particulier une source de pression de gaz azote, en particulier une source de pression de gaz azote adaptée à appliquer une pression d'au moins 2,5 MPa à l'intérieur de boîtier (71).

15. Appareil d'extrusion (50) selon l'une quelconque des revendications 13 et 14, dans lequel l'appareil d'extrusion (50) comprend un deuxième sas de pression (85) en aval de la buse de sortie de matière (74) pour laisser sortir la matière de l'intérieur de boîtier (71) de l'appareil d'extrusion (50), dans lequel le deuxième sas de pression (85) est adapté à maintenir la pression dans l'intérieur de boîtier (71) de l'appareil d'extrusion (50) pendant la sortie de matière.
